# EUROPÄISCHE PATENTSCHRIFT

(11) **EP 0 853 319 B1**
(45) Veröffentlichungstag und Bekanntmachung des Hinweises auf die Patenterteilung: **17.03.2004**
(21) Anmeldenummer: 97120225.4
(22) Anmeldetag: 19.11.1997
(51) Int. Cl.: G11B 33/04, G11B 23/023

(54) **Aufbewahrungsvorrichtung für vorzugweise mehrere Compact Discs**
Storage device for, for example, multiple compact discs
Moyen de stockage pour, par exemple, plusieurs disques compacts

(30) Priorität: 10.01.1997 DE 29700314 U
(43) Veröffentlichungstag der Anmeldung: 15.07.1998
(73) Patentinhaber: fischerwerke Artur Fischer GmbH & Co. KG, 72178 Waldachtal (DE)
(72) Erfinder: Kaupp, Jochen, 72178 Waldachtal (DE)

(56) Entgegenhaltungen:
- WO-A-87/05884
- DE-A- 3 326 465
- DE-A- 3 338 518
- DE-A- 19 525 656
- US-A- 4 722 034
- US-A- 5 377 175

## Beschreibung

Die Erfindung betrifft eine Aufbewahrungsvorrichtung für vorzugsweise mehrere Compact Discs mit den Merkmalen des Oberbegriffs des Anspruchs 1, die zum Einbau beispielsweise in eine Mittelkonsole eines Personenkraftwagens vorgesehen ist.

Eine aus der DE 39 42 845 A1 bekannte Aufbewahrungsvorrichtung weist ein kastenförmiges, an einer Frontseite offenes Gehäuse auf, in dem Schieber nach Art von Schubladen aus einer in das Gehäuse eingeschobenen Stellung in eine an der Frontseite aus dem Gehäuse vorstehende Entnahmestellung verschiebbar geführt sind. Die Schieber weisen eine kreisförmige Vertiefung mit dem Durchmesser einer Compact Disc auf, die als Aufnahme zum Einlegen einer Compact Disc dient. Das Ausschieben der Schieber in die Entnahmestellung erfolgt mittels eines Öffnungsfederelements. In ihrer eingeschobenen Stellung werden die Schieber von einer Verriegelungseinrichtung gehalten, die mit einer Entriegelungstaste entriegelbar ist.

Die Verriegelungseinrichtung der bekannten Aufbewahrungsvorrichtung ist an der Frontseite der Schieber, und zwar abwechselnd links und rechts, um ein versehentliches gleichzeitiges Entriegeln zweier Schieber zu vermeiden, angeordnet. Die Verriegelungseinrichtung weist einen Biegebalken auf, dessen eines Ende gelenkig am Schieber angebracht ist und dessen anderes Ende durch einen Kragträger in Längsrichtung des Biegebalkens verschiebbar am Schieber gelagert ist. Der mit dem Biegebalken einstückige Kragträger steht in etwa rechtwinklig vom Biegebalken ab und ist an seinem vom Biegebalken entfernten Ende gelenkig mit dem Schieber verbunden. Das kragträgerseitige Ende des Biegebalkens steht in Verlängerung des Biegebalkens über den Kragträger und seitlich über den Schieber vor. Es bildet eine Rastnase, die bei in der eingeschobenen Stellung befindlichem Schieber mit einer durch eine Gehäuseaussparung gebildete Rastfläche in Eingriff steht. In seiner Mitte weist der Biegebalken die Entriegelungstaste auf, die rechtwinklig zur Frontseite des Schiebers hin von ihm absteht. Durch Drücken der Entriegelungstaste wird der Biegebalken elastisch durchgebogen und verkürzt dadurch den Abstand seiner Enden voneinander. Auf diese Weise wird sein die Rastnase bildendes Ende seitlich in den Schieber hineingezogen und kommt außer Eingriff von der Rastfläche des Gehäuses, so daß der Schieber entriegelt ist und von dem Öffnungsfederelement in die Entnahmestellung aus dem Gehäuse herausgeschoben wird.

Die Verriegelungseinrichtung der bekannten Aufbewahrungsvorrichtung ist kompliziert geformt, so daß ein zu ihrer Herstellung notwendiges Spritzgießwerkzeug aufwendig herzustellen und infolgedessen teuer ist.

Aus der WO 87/05884, die eine Aufbewahrungsvorrichtung gemäß Oberbegriff des Anspruchs 1 beschreibt, ist eine Aufbewahrungsschachtel für eine einzelne Compact Disc bekannt, die allerdings nicht zum Einbau in einen Personenkraftwagen vorgesehen ist. Die bekannte Aufbewahrungsschachtel weist ein Gehäuse mit einem Schieber auf, in den eine Compact Disc einlegbar ist. Zur Verriegelung des Schiebers in einem Gehäuse weist der Schieber eine seitlich angeordnete Federlasche auf, die in eine Aussparung in einer Seitenwand der Schachtel eingreift. Die Federlasche lässt sich seitlich eindrücken, wodurch der Schieber entriegelt und von einem Öffnungsfederelement aus der Schachtel herausgeschoben wird. Die bekannte Aufbewahrungsschachtel hat den Nachteil, daß die Federlasche zur Entriegelung von einer Seite der Schachtel her zugänglich sein muß, um sie seitlich eindrücken zu können. Die bekannte Aufbewahrungsschachtel ist daher ungeeignet zum Einbau in Kraftwagen wo die Seitenfläche der Aufbewahrungsschachtel nicht zugänglich wäre.

Eine weitere Aufbewahrungsvorrichtung mit mehreren in einem Gehäuse angeordneten Schiebern offenbart die US-A-4 722 034. Eine Verriegelungseinrichtung dieser Aufbewahrungsvorrichtung weist eine Entriegelungstaste auf, die seitlich verschiebbar in einer Frontfläche der Schieber geführt ist. Die Entriegelungstaste wirkt mit einem Riegel zusammen, der seitlich verschiebbar im Schieber einliegt und von einem Federelement in Eingriff mit einer Aussparung in einer Seitenwand des Gehäuses in Eingriff gedrückt wird. Mit der Entriegelungstaste ist der Riegel gegen die Kraft des Federelements außer Eingriff von der Aussparung verschiebbar, wodurch der Schieber entriegelt wird. Die Aussparung in der Seitenwand des Gehäuses bildet eine Rastfläche für den Riegel.

Es ist daher Aufgabe der Erfindung, eine Aufbewahrungsvorrichtung für vorzugsweise mehrere Compact Discs der eingangs genannten Art mit einer einfach ausgebildeten und kostengünstig herstellbaren Verriegelungseinrichtung zu schaffen.

Diese Aufgabe wird erfindungsgemäß durch die Merkmale des Anspruchs 1 gelöst. Die Verriegelungseinrichtung der erfindungsgemäßen Aufbewahrungsvorrichtung weist einen in Verschieberichtung des Schiebers verlaufenden Biegebalken auf, dessen eines Ende fest am Schieber angebracht ist. Das andere Ende des Biegebalkens ist frei, läßt sich also unter elastischer Biegung des Biegebalkens zur Seite drücken. Die Entriegelungstaste ist vorzugsweise einstückig am freien Ende des Schiebers angebracht. Durch Betätigung der Entriegelungstaste wird der Biegebalken elastisch gebogen. Auf der Seite des Biegebalkens, von der dieser durch Betätigung der Entriegelungstaste weggebogen wird, ist eine Rastnase mit Abstand vom festen Ende des Biegebalkens angeordnet, die bei in das Gehäuse eingeschobenem Schieber mit einer Rastfläche des Gehäuses in Eingriff steht. Diese Rastfläche kann den Rand einer Gehäuseaussparung bilden. Durch Betätigen der Entriegelungstaste wird der Biegebalken durchgebogen, so daß die Rastnase außer Eingriff von der Rastfläche gelangt und der Schieber vom Öffnungsfederelement in die Entnahmeposition aus dem Gehäuse herausgeschoben wird. Alternativ kann der Biegebalken mit der Rastnase auch am Gehäuse und die Rastfläche am Schieber vorgesehen werden. Die Rastnase steht vorzugsweise seitlich vom Schieber ab bzw. greift seitlich an diesem an. Die Entriegelungstaste steht in entgegengesetzter Richtung wie die Rastnase vom Biegebalken ab. Die Entriegelungstaste befindet sich an einer Frontseite der Aufbewahrungsvorrichtung und ist dadurch gut zugänglich, wenn die Aufbewahrungsvorrichtung in einem Kraftwagen eingebaut ist.

Die Erfindung hat den Vorteil, daß der Biegebalken und die Entriegelungstaste ihrer Verriegelungseinrichtung einfach geformt und dadurch kostengünstig herstellbar sind.

Bei einer bevorzugten Ausgestaltung steht die Entriegelungstaste seitlich vom freien Ende des Biegebalkens ab. Sie ist vorzugsweise einstückig mit dem Biegebalken. Durch Druck von vom, also parallel zur Längsrichtung des Biegebalkens, auf die Entriegelungstaste, wird der Biegebalken elastisch gebogen, da der Kraftangriff seitlich des Biegebalkens erfolgt und über die Entriegelungstaste in ein auf den Biegebalken wirkendes Biegemoment umgesetzt wird. Auf diese Weise läßt sich eine mechanisch und konstruktiv sehr einfach ausgebildete Verriegelungseinrichtung herstellen, die den Schieber in seiner in das Gehäuse eingeschobenen Stellung sicher verriegelt.

Zur zusätzlichen Abstützung der Entriegelungstaste kann diese ein Federelement, beispielsweise eine in ihrer Verlängerung von ihr abstehende Federzunge, aufweisen, mit dem sie sich am Schieber oder, sofern die Verriegelungseinrichtung am Gehäuse vorgesehen ist, an diesem abstützt.

Der Biegebalken der Verriegelungseinrichtung und die vorzugsweise mit ihm einstückige Entriegelungstaste können einstückig mit dem Schieber bzw. mit dem Gehäuse ausgebildet sein. Vorzugsweise sind der Biegebalken und die Entriegelungstaste zweistückig vom Schieber oder dem Gehäuse. Sie können beispielsweise formschlüssig in eine Aussparung des Schiebers eingesetzt sein, wobei der Formschluß die am Biegebalken auftretenden Biegemomente in den Schieber einleiten. Die zweistückige Ausführungsform hat den Vorteil, daß der Schieber aus preiswertem Kunststoff hergestellt werden kann und der Biegebalken, der aus hochwertigem, dauerelastischem Werkstoff bestehen muß, nur wenig Werkstoff benötigt. Auf diese Weise lassen sich die Werkstoffkosten der erfindungsgemäßen Aufbewahrungsvorrichtung verringern. Weiterer Vorteil der zweistückigen Ausführungsform ist, daß die Entriegelungstaste eine andere Farbe als das Gehäuse haben kann.

Bei einer Ausgestaltung der Erfindung weist der Schieber eine Öffnung oder eine Ausnehmung an seiner Frontseite auf, durch die zumindest ein Umfangsabschnitt einer vom Schieber aufgenommenen Compact Disc sichtbar ist. Diese Öffnung oder Ausnehmung ermöglicht eine einfache Sichtkontrolle, ob der Schieber mit einer Compact Disc belegt oder ob er leer ist.

Bei einer Ausgestaltung der Erfindung weist die Aufnahmevorrichtung mehrere Schieber auf, deren Öffnungsfederelemente als zur Frontseite des Gehäuses gebogene Biegefedern ausgebildet sind. Diese Biegefedern sind Zinken eines Federkamms, der mit seinem Kammrücken im Bereich einer Rückseite am Gehäuse angebracht ist. Auf diese Weise lassen sich die Öffnungsfederelemente einfach, schnell und gemeinsam in einem Arbeitsgang herstellen und zur ebenfalls gemeinsamen Montage im Gehäuse gut handhaben.

Um eine Compact Disc klapperfrei an einem Schieber zu halten und um Relativbewegungen zwischen Compact Disc und Schieber, die die Compact Disc beschädigen würden, zu vermeiden, sieht eine Ausgestaltung der Erfindung ein oder mehrere Haltefederelemente beispielsweise in Form von mit dem Schieber einstückigen Federzungen vor, die gegen den Umfang einer vom Schieber aufgenommenen Compact Disc und diese dadurch unter eine Unterschneidung drücken, die auf einer in etwa den Haltefederelementen gegenüberliegenden Seite des Umfangs der Compact Disc am Schieber angeordnet ist.

Zur Belegt-/Leeranzeige insbesondere bei Dunkelheit ist bei einer bevorzugten Ausgestaltung ein Lichtleiter vorgesehen, der von einer Lichtquelle zumindest bei in das Gehäuse eingeschobenem Schieber zu einem Umfangsrand einer vom Schieber aufgenommenen Compact Disc führt. Die Lichtquelle kann eine Glühbirne, insbesondere eine ohnehin zur Instrumenten- oder Schalternachtbeleuchtung im Personenkraftwagen vorhandene Glühbirne sein. Die üblicherweise aus lichtleitendem Material hergestellte Compact Disc wird in diesem Fall als Lichtleiter verwendet. Der Umfangsrand erscheint zumindest im Bereich der Frontseite des Schiebers beleuchtet, so daß bei Dunkelheit problemlos erkennbar ist, ob eine Compact Disc vom Schieber aufgenommen ist oder nicht. Die Lichtquelle kann bei Ausführungsformen der Erfindung den Umfangsrand der Compact Disc auch unmittelbar anstrahlen.

Eine Weiterbildung dieser Ausgestaltung der Erfindung weist einen sich verzweigenden Lichtleiter auf, der von einer gemeinsamen Lichtquelle kommend zu mehreren Schiebern verläuft.

Eine Ausgestaltung der Erfindung weist eine federnde Rastnase auf, die an einer Ausschubwegbegrenzung anstößt, wenn das Öffnungsfederelement den Schieber in die Entnahmeposition aus dem Gehäuse herausschiebt. Auf diese Weise wird der Ausschubweg des Schiebers begrenzt und seine Entnahmestellung festgelegt.

Die Erfindung wird nachfolgend anhand eines in der Zeichnung dargestellten Ausführungsbeispiels näher erläutert.

Es zeigen:
- Figur 1: eine erfindungsgemäße Aufbewahrungsvorrichtung in perspektivischer Darstellung;
- Figur 2: einen Schieber der in Figur 1 dargestellten Aufbewahrungsvorrichtung in Draufsicht;
- Figur 3: eine Einzelheitdarstellung gemäß Pfeil III in Figur 2 in Draufsicht in vergrößerter Darstellung; und
- Figur 4: eine Schnittdarstellung gemäß Linie IV-IV in Figur 2.

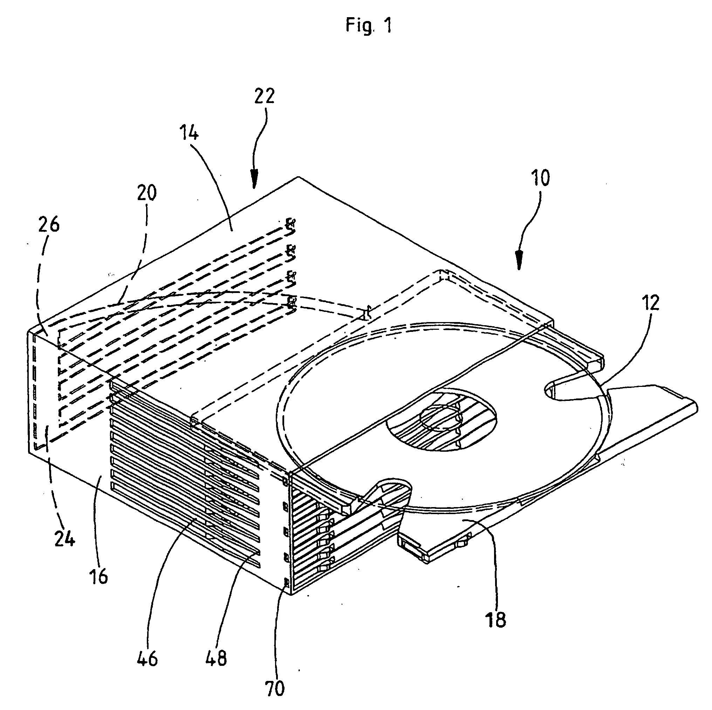

Die in Figur 1 dargestellte, erfindungsgemäße Aufbewahrungsvorrichtung 10 für Compact Discs 12 ist insbesondere zum Einbau in eine Mittelkonsole eines Personenkraftwagens vorgesehen. Die Aufbewahrungsvorrichtung 10 weist ein an seiner Frontseite offenes, kastenförmiges Gehäuse 14 auf. Dessen Seitenwände 16 sind mit in der Zeichnung nicht sichtbaren, in Längsrichtung verlaufenden und nach innen stehenden Rippen versehen, die Schieberführungen bilden, mit denen der Aufnahme der Compact Discs 12 dienende Schieber 18 schubladenartig geführt sind.

Die Schieber 18 werden von Öffnungsfederelementen in eine auf der Frontseite vorstehende Entnahmestellung gedrückt. Die Öffnungsfederelemente werden von Biegefedem 20 gebildet, die mit ihrem einen Ende im Seitenbereich einer Gehäuserückwand 22 angebracht ist und die zur Frontseite des Gehäuses 14 hin gewölbt sind. Bei in das Gehäuse 14 eingeschobenem Schieber 18 befinden sich die Biegefedem 20 an oder mit wenig Abstand vor der Gehäuserückwand 22.

Die Biegefedern 20 sind einstückiger Bestandteil eines Federkamms 24, dessen Zinken sie bilden und dessen Kammrücken 26 fest im Seitenbereich auf einer Innenseite der Gehäuserückwand 22 angebracht ist. Die Biegefedern 20 verlaufen quer im Gehäuse 14. Die erfindungsgemäße Aufbewahrungsvorrichtung 10 weist zwei solche Federkämme 24 auf, von denen der klaren Darstellung wegen nur einer dargestellt ist. Der zweite, nicht dargestellte Federkamm ist dem dargestellten Federkamm 24 entgegengerichtet mit seinem Kammrücken auf der anderen Seite der Gehäuserückwand 22 angebracht. Seine als Biegefedern ausgebildeten Zinken ragen zwischen die Biegefedem 20 des dargestellten Federkamms 24. Die Biegefedern 20 eines Federkamms 24 beaufschlagen also jeden zweiten Schieber 18, die dazwischenliegenden Schieber 18 werden von den Biegefedern des anderen Federkamms in die aus dem Gehäuse 14 vorstehende Entnahmestellung gedrückt.

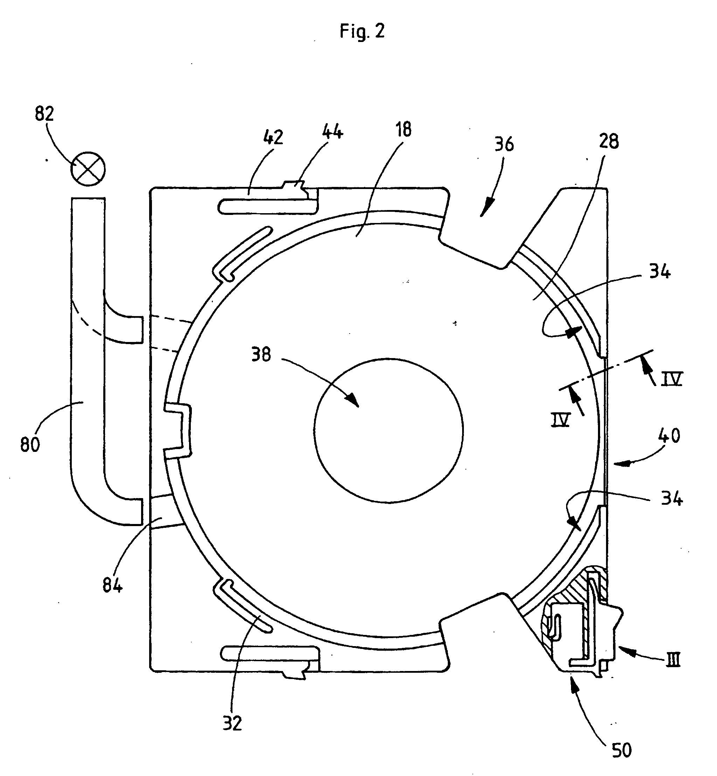

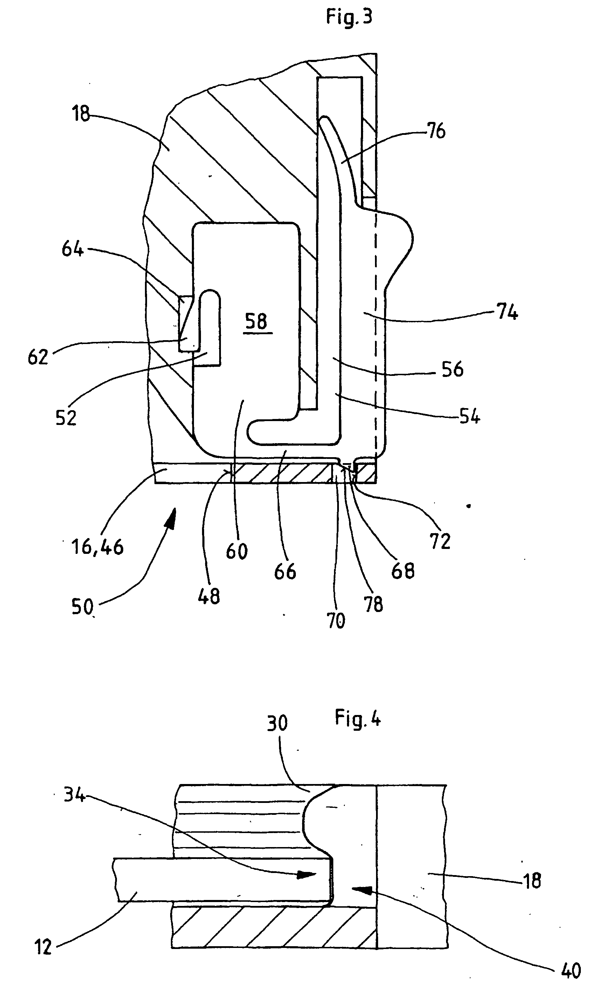

Der Schieber 18 ist in Figur 2 in Draufsicht dargestellt, seine Frontseite ist in Figur 2 rechts. Der Schieber 18 weist eine kreisförmige Vertiefung 28 vom Durchmesser der Compact Disc 12 als Aufnahme für die Compact Disc 12 auf. Um die Compact Disc 12 einfacher einlegen zu können, weist die Vertiefung 28 eine Fase 30, also eine trichterförmige oder konische Erweiterung an seinem Oberrand, auf (vgl. Figur 4).

Zur Halterung einer in die Aufnahme 28 des Schiebers 18 eingelegten Compact Disc 12 weist der Schieber 18 zwei Haltefederelemente 32 auf, die mit Unterschneidungen 34 zusammenwirken. Die Haltefederelemente 32 sind als mit dem Schieber 18 einstückige Zungenfedem 32 ausgebildet, die seitlich im rückwärtigen Bereich der Aufnahme 28 angeordnet sind. Die Zungenfedern 32 befinden sich am Umfang der Aufnahme 28 und verlaufen in Umfangsrichtung. Sie drücken die eingelegte Compact Disc 12 in Richtung der Frontseite des Schiebers 18, d. h. in Figur 2 nach rechts. Im Bereich der Frontseite weist die vertiefte Aufnahme 28 Unterschneidungen 34 (vgl. Figur 4) an ihrem Umfang auf, in die eine in die Aufnahme 28 des Schiebers 18 eingelegte Compact Disc 12 gedrückt wird. Das Einlegen der Compact Disc 12 erfolgt durch Drücken der Compact Disc 12 nach hinten gegen die Federzungen 32 und durch Niederdrücken der Compact Disc 12 im Bereich der Frontseite des Schiebers 18 in die Unterschneidung 34 hinein. Das Herausnehmen der Compact Disc 12 erfolgt ebenfalls durch Drücken der Compact Disc 12 nach hinten gegen die Zungenfedern 32 und Herausheben aus der vertieften Aufnahme 28. Um die Compact Disc 12 gut greifen zu können, weist der Schieber 18 zwei seitliche Ausnehmungen 36, die bis in die Aufnahme 28 hineinragen, sowie ein Mittelloch 38 auf, das es ermöglicht, einen Zeigefinger durch ein Mittelloch einer in die Aufnahme 28 eingelegten Compact Disc 12 zu stecken, um sie durch Greifen mit einem Daumen am Umfang zwischen Zeigefinger und Daumen halten zu können.

Zur Belegt-/Leeranzeige weist die Umfangswandung der vertieften Aufnahme 28 eine Ausnehmung 40 an der Frontseite des Schiebers 18 auf, die die Unterschneidung 34 , unterbricht und durch die bei in das Gehäuse 14 eingeschobenem Schieber 18 sichtbar ist, ob eine Compact Disc 12 in die Aufnahme 28 des Schiebers 18 eingelegt ist oder nicht.

Zur Begrenzung eines Ausschubwegs des Schiebers 18 aus dem Gehäuse 14 weist der Schieber 18 zwei mit ihm einstückige Federzungen 42 auf. Diese sind in Längsrichtung des Schiebers 18 verlaufend auf seinen beiden Seiten in seinem rückwärtigen Bereich angeordnet. Sie weisen seitlich überstehende Rastnasen 44 auf, die in längsverlaufende Schlitze 46 in den Seitenwänden 16 des Gehäuses 14 eingreifen. Ein vorderes, geschlossenes Ende 48 dieser Schlitze 46 bildet eine Ausschubwegbegrenzung, gegen das die Rastnasen 44 des Schiebers 18 stoßen, wenn der Schieber 18 von der Biegefeder 20 in die aus dem Gehäuse 14 vorstehende Entnahmestellung gedrückt wird. Beim ersten Einsetzen des Schiebers 18 in das Gehäuse 14 zur Montage der erfindungsgemäßen Aufbewahrungsvorrichtung 10 werden die federnden Rastnasen 44 von der Seitenwand 16 des Gehäuses 14 nach innen gedrückt und federn bei Erreichen der Schlitze 46 in diese hinein.

Um den Schieber 18 in der in das Gehäuse 14 eingeschobenen Stellung zu arretieren, weist die erfindungsgemäße Aufbewahrungsvorrichtung 10 eine Verriegelungseinrichtung 50 auf (Figur 3). Die Verriegelungseinrichtung 50 ist an der Seite des Schiebers 18 an dessen Frontseite angeordnet, und zwar von Schieber 18 zu Schieber 18 abwechselnd auf der rechten und der linken Seite. Vorzugsweise ist die Verriegelungseinrichtung 50 auf der Seite vorgesehen, gegen die die Biegefeder 20 drückt. Der Schieber 18 weist eine seitlich offene, rechteckförmige Ausnehmung 52 auf, vor der sich ein ebenfalls seitlich und außerdem zur Frontseite offener, mit der rechteckförmigen Ausnehmung 52 in Verbindung stehender Schlitz 54 befindet, der entlang der Frontseite des Schiebers 18 verläuft. Die Ausnehmung 52 und der Schlitz 54 werden von mit dem Schieber 18 einstückigen Wandungsplatten 56 über- und unterdeckt, sie sind auf der Ober- und Unterseite des Schiebers 18 geschlossen.

In die rechteckförmige Ausnehmung 52 ist ein komplementärer Grundkörper 58 eines Verriegelungsteils 60 eingesetzt und mit einer Rastnase 62, die in eine Aussparung 64 der rechteckförmigen Ausnehmung 52 des Schiebers 18 eingreift, in der Ausnehmung 52 des Schiebers 18 verrastet. Vom Grundkörper 58 steht ein Biegebalken 66 entlang der Seite des Schiebers 18 zu dessen Frontseite hin ab. Der Biegebalken 66 befindet sich also innen an der Seitenwand 16 des Gehäuses 14. Mit dem Biegebalken 66 an dessen dem Grundkörper 58 fernen Ende ist eine seitlich überstehende Rastnase 68 einstückig, die in eine Aussparung 70 der Seitenwand 16 des Gehäuses 14 eingreift. Die Aussparung 70 befindet sich vor dem die Ausschubwegbegrenzung bildenden vorderen Ende 48 des Schlitzes 46 in der Seitenwand 16. Ein vorderer Rand der Aussparung 70 bildet eine Rastfläche 72, an der die Rastnase 68 angreift und den Schieber 18 gegen die Kraft der Biegefeder 20 in der in das Gehäuse 14 eingeschobenen Stellung hält.

Zum Entriegeln weist die Verriegelungseinrichtung 50 eine Entriegelungstaste 74 auf, die einstückig an dem dem Grundkörper 58 abgewandten, freien Ende des Biegebalkens 66 angebracht ist und rechtwinklig von diesem zur Längsmitte des Schiebers 18 hin absteht. Die Entriegelungstaste 74 liegt im Schlitz 54 des Schiebers 18 ein. Sie steht durch den zur Frontseite offenen Schlitz 54 etwas über die Frontseite des Schiebers 18 vor und stützt sich über eine sie auf einer dem Biegebalken 66 abgewandten Seite fortsetzenden Federzunge 76 gegen den Schieber 18 ab. Zur Entriegelung des Schiebers 18 wird die Entriegelungstaste 74 betätigt, d. h. von der Frontseite des Schiebers 18 in diesen hineingedrückt. Dadurch wird der Biegebalken 66 elastisch zur Längsmitte des Schiebers 18 gebogen und seine Rastnase 68 kommt von der Rastfläche 72 frei, woraufhin die Biegefeder 20 den Schieber 18 in die aus dem Gehäuse 14 vorstehende Entnahmestellung drückt. Wird der Schieber 18 gegen die Kraft der Biegefeder 20 vollständig in das Gehäuse 14 hineingedrückt, drückt eine Schrägfläche 78 der Rastnase 68 durch Anlage an der Seitenwand 16 des Gehäuses 14 den Biegebalken 66 elastisch nach innen, bis die Rastnase 68 in die Aussparung 70 der Seitenwand 16 des Gehäuses 14 federt.

An der Innenseite der Gehäuserückwand 22 ist ein Lichtleiter 80 angeordnet, wie er in Figur 2 andeutungsweise dargestellt ist. Dieser Lichtleiter 80 kommt von einer gemeinsamen Lichtquelle 82 und verzweigt sich zu Rückseiten der im Gehäuse 14 geführten Schieber 18. Bei eingeschalteter Lichtquelle 82 strahlt der Lichtleiter 80 Licht durch Aussparungen 84 in der Rückseite des Schiebers 18 in der Ebene des Schiebers 18 gegen einen Umfang einer in den Schieber 18 eingelegten Compact Disc 12. Die Compact Disc 12, die üblicherweise aus lichtleitendem Material hergestellt ist, dient als Lichtleiter, ihr Umfang erscheint durch die Beleuchtung mit dem Lichtleiter 80 zumindest im Bereich der Frontseite des Schiebers 18 erleuchtet. Dadurch ist auch bei Dunkelheit gut erkennbar, ob in einem in das Gehäuse 14 eingeschobenen Schieber 18 eine Compact Disc 12 eingelegt ist oder nicht.

## Patentansprüche

1. Aufbewahrungsvorrichtung für vorzugsweise mehrere Compact Discs, mit einem Gehäuse (14), das eine Schieberführung aufweist, mit der ein Schieber (18) zur Aufnahme einer Compact Disc (12) nach Art einer Schublade geführt ist, der von einem Öffnungsfederelement (20) in eine an einer Frontseite des Gehäuses (14) vorstehende Entnahmestellung gedrückt wird und der von einer Verriegelungseinrichtung (50) gegen die Kraft des Öffnungsfederelements (20) in einer in das Gehäuse (14) eingeschobenen Stellung gehalten wird, wobei die Verriegelungseinrichtuhg (50) mit einer Entriegelungstaste (74) entriegelbar ist, und wobei die Verriegelungseinrichtung (50) einen Biegebalken (66) aufweist, dessen eines Ende fest an dem Schieber (18) oder am Gehäuse (14) angebracht und dessen anderes Ende frei ist, wobei der Biegebalken (66) mit Abstand von seinem festen Ende eine seitlich abstehende Rastnase (68) aufweist, die bei in der eingeschobenen Stellung befindlichem Schieber (18) mit einer Rastfläche (72) an einer Seite des Gehäuses (14) oder des Schiebers (18) in Eingriff steht, **dadurch gekennzeichnet, daß** der Biegebalken (66) die Entriegelungstaste (74) an seinem freien Ende aufweist, daß die Entriegelungstaste (74) von einer der Rastnase (68) abgewandten Seite seitlich von dem Biegebalken (66) absteht, und daß sich die Entriegelungstaste (74) an der Frontseite der Aufbewahrungsvorrichtung (10) befindet, wobei der Biegebalken (66) durch Betätigung der Entriegelungstaste (74) elastisch biegbar ist, so daß seine Rastnase (68) von der Rastfläche (74) freikommt.

2. Aufbewahrungsvorrichtung nach Anspruch 1, **dadurch gekennzeichnet, daß** die Entriegelungstaste (74) seitlich abstehend am freien Ende des Biegebalkens (66) angebracht ist.

3. Aufbewahrungsvorrichtung nach Anspruch 2, **dadurch gekennzeichnet, daß** die Entriegelungstaste (74) ein Federelement (76) an einem dem Biegebalken (66) abgewandten Ende aufweist, mit dem sie sich gegen den Schieber (18) oder das Gehäuse (14) abstützt.

4. Aufbewahrungsvorrichtung nach Anspruch 1, **dadurch gekennzeichnet, daß** der Biegebalken (66) mit der Entriegelungstaste (74) in eine als Aufnahme dienende Aussparung (52, 54) des Schiebers (18) oder des Gehäuses (14) eingesetzt ist.

5. Aufbewahrungsvorrichtung nach Anspruch 1, **dadurch gekennzeichnet, daß** der Schieber (18) eine Ausnehmung (40) an seiner Frontseite aufweist, durch die eine von ihm aufgenommene Compact Disc (12) sichtbar ist.

6. Aufbewahrungsvorrichtung nach Anspruch 1, **dadurch gekennzeichnet, daß** die Aufbewahrungsvorrichtung (10) mehrere Schieber (18) aufweist, und daß die Aufbewahrungsvorrichtung (10) einen Federkamm (24) aufweist, dessen Kammrücken (26) im Bereich einer Rückseite des Gehäuses (14) angebracht ist und dessen Zinken als zur Frontseite des Gehäuses (14) gebogene Biegefedem (20) ausgebildet sind, die Öffnungsfederelemente für je einen Schieber (18) bilden.

7. Aufbewahrungsvorrichtung nach Anspruch 1, **dadurch gekennzeichnet, daß** der Schieber (18) ein Haltefederelement (32) aufweist, das gegen einen Umfang einer vom Schieber (18) aufgenommenen Compact Disc (12) und diese unter eine Unterschneidung (34) des Schiebers (18) drückt, die dem Haltefederelement (32) in etwa gegenüberliegend am Schieber (18) angeordnet ist.

8. Aufbewahrungsvorrichtung nach Anspruch 1, **dadurch gekennzeichnet, daß** die Aufbewahrungsvorrichtung (10) eine Lichtquelle (82) aufweist, die gegen einen Umfangsrand einer vom Schieber (18) aufgenommenen Compact Disc strahlt.

9. Aufbewahrungsvorrichtung nach Anspruch 8, **dadurch kennzeichnet, daß** die Lichtquelle (82) einen Lichtleiter (80) aufweist, der von der Lichtquelle (82) zu dem Umfangsrand einer vom Schieber (18) aufgenommenen Compact Disc (12) führt.

10. Aufbewahrungsvorrichtung nach Anspruch 9, **dadurch gekennzeichnet, daß** die Aufbewahrungsvorrichtung (10) mehrere Schieber (18) aufweist, und daß der Lichtleiter (80) von einer gemeinsamen Lichtquelle (82) kommend sich zu den Schiebern (18) hin verzweigt.

11. Aufbewahrungsvorrichtung nach einem der Ansprüche 1, 7 oder 8, **dadurch gekennzeichnet, daß** der Schieber (18) oder das Gehäuse (14) eine federnde Rastnase (44) aufweist, die bei in der Entnahmestellung befindlichem Schieber (18) an einer Ausschubwegbegrenzung (72) des Gehäuses (14) oder des Schiebers (18) anliegt.

## Claims

1. Storage device for preferably several compact discs, having a housing (14), which has a slider member guide means, by means of which a slider member (18) for accommodating a compact disc (12) is guided in the manner of a drawer, which slider member is urged by an opening spring element (20) into a removal position projecting out from a front face of the housing (14) and is held by a latching arrangement (50) against the force of the opening spring element (20) in a position pushed into the housing (14), it being possible to unlatch the latching arrangement (50) using an unlatching button (74), and the latching arrangement (50) having a bending bar (66), one end of which is fixedly attached to the slider member (18) or to the housing (14) and the other end of which is free, and the bending bar (66) having, at a distance from its fixed end, a catching lug (68), which juts out laterally and is in engagement with a catching surface (72) on a side of the housing (14) or of the slider member (18) when the slider member (18) is in the pushed-in position, **characterised in that** the bending bar (66) has the unlatching button (74) at its free end; the unlatching button (74) juts out laterally from a side of the bending bar (66) that faces away from the catching lug (68); and the unlatching button (74) is located on the front face of the storage device (10), it being possible, on actuation of the unlatching button (74), for the bending bar (66) to bend resiliently, so that its catching lug (68) comes free of the catching surface (72).

2. Storage device according to claim 1, **characterised in that** the unlatching button (74) is arranged to jut out laterally from the free end of the bending bar (66).

3. Storage device according to claim 2, **characterised in that** the unlatching button (74) has, at an end away from the bending bar (66), a spring element (76), by means of which the unlatching button (74) is supported against the slider member (18) or the housing (14).

4. Storage device according to claim 1, **characterised in that** the bending bar (66) bearing the unlatching button (74) is mounted in a recessed region (52, 54) in the slider member (18) or housing (14), the recessed region (52, 54) serving as a seat for the bending bar (66).

5. Storage device according to claim 1, **characterised in that** the slider member (18) has, on its front face, a cut-away region (40), through which a compact disc (12) accommodated by the slider member (18) is visible.

6. Storage device according to claim 1, **characterised in that** the storage device (10) has several slider members (18) and the storage device (10) has a spring comb (24), the back (26) of which is attached in the region of a rear face of the housing (14) and the teeth of which are constructed in the form of bending springs (20) bent towards the front face of the housing (14), each bending spring (20) forming the opening spring element for one slider member (18).

7. Storage device according to claim 1, **characterised in that** the slider member (18) has a holding spring element (32), which pushes against the periphery of a compact disc (12) accommodated by the slider member (18) and urges the compact disc (12) under an undercut region (34) of the slider member (18), which undercut region (34) is arranged on the slider member (18) to be approximately opposite the holding spring element (32).

8. Storage device according to claim 1, **characterised in that** the storage device (10) has a light source (82), which shines on a peripheral edge of a compact disc accommodated by the slider member (18).

9. Storage device according to claim 8, **characterised in that** the light source (82) has a light guide (80), which leads from the light source (82) to the peripheral edge of a compact disc (12) accommodated by the slider member (18).

10. Storage device according to claim 9, **characterised in that** the storage device (10) has several slider members (18) and the light guide (80), which starts at a common light source (82), branches out towards the slider members (18).

11. Storage device according to any one of claims 1, 7 and 8, **characterised in that** the slider member (18) or housing (14) has a resilient catching lug (44), which is in contact with a travel limit stop (72) of the housing (14) or the slider member (18) when the slider member (18) is in the removal position.

## Revendications

1. Dispositif de rangement pour, de préférence, plusieurs disques compacts, comprenant un boîtier (14), qui comporte une glissière de coulissement, dans laquelle est guidé à la manière d'un tiroir un élément coulissant (18), qui est destiné à recevoir un disque compact (12) et qui est poussé au moyen d'un élément d'ouverture à ressort (20) dans une position de prélèvement en saillie sur la face frontale du boîtier (14) et est maintenu par un système de verrouillage (50) dans une position insérée à l'intérieur du boîtier (14) à l'encontre de la force exercée par l'élément d'ouverture à ressort (20), le système de verrouillage (50) pouvant être déverrouillé par une touche de déverrouillage (74) et le système de verrouillage (50) étant muni d'une tige flexible (66), dont une extrémité est assemblée de manière fixe avec l'élément coulissant (18) ou avec le boîtier (14) et dont l'autre extrémité est libre, la tige flexible (66) étant munie, à une distance de son extrémité fixe, d'un taquet d'encliquetage (68) en saillie latérale qui, lorsque l'élément coulissant (18) est en position insérée, entre en prise avec une surface d'encliquetage (72) sur un côté du boîtier (14) ou de l'élément coulissant (18), **caractérisé en ce que** la tige flexible (66) est munie sur son extrémité libre de la touche de déverrouillage (74), **en ce que** la touche de déverrouillage (74) s'avance en saillie latérale sur la tige flexible (66) sur un côté opposé au taquet d'encliquetage (68), et **en ce que** la touche de déverrouillage (74) est disposée sur la face frontale du dispositif de rangement (10), la tige flexible (66) pouvant être pliée de manière élastique par une action exercée sur la touche de déverrouillage (74), de telle sorte que son taquet d'encliquetage (68) est amené hors de prise de la surface d'encliquetage (72).

2. Dispositif de rangement selon la revendication 1, **caractérisé en ce que** la touche de déverrouillage (74) est disposée en saillie latérale sur l'extrémité libre de la tige flexible (66).

3. Dispositif de rangement selon la revendication 2, **caractérisé en ce que** la touche de déverrouillage (74) est munie d'un élément à ressort (76) sur une extrémité opposée à la tige flexible (66), par lequel elle vient en appui contre l'élément coulissant (18) ou le boîtier (14).

4. Dispositif de rangement selon la revendication 1, **caractérisé en ce que** la tige flexible (66) est insérée avec la touche de déverrouillage (74) dans un évidement (52, 54), faisant fonction de logement, dans l'élément coulissant (18) ou le boîtier (14).

5. Dispositif de rangement selon la revendication 1, **caractérisé en ce que** l'élément coulissant (18) comporte un creux (40) sur sa face frontale, à travers lequel on peut voir un disque compact (12) logé dans ledit creux.

6. Dispositif de rangement selon la revendication 1, **caractérisé en ce que** le dispositif de rangement (10) comporte plusieurs éléments coulissants (18) et **en ce que** le dispositif de rangement (10) comporte un peigne flexible (24), dont le dos est fixé dans la zone d'une face arrière du boîtier (14) et dont les dents sont conçues sous forme de lames flexibles (20) courbées vers la face frontale du boîtier (14), lesquelles forment des éléments d'ouverture à ressort pour chaque élément coulissant (18).

7. Dispositif de rangement selon la revendication 1, **caractérisé en ce que** l'élément coulissant (18) comporte un élément de retenue à ressort (32) qui pousse contre le pourtour d'un disque compact (12) posé dans l'élément coulissant (18) et pousse ledit disque compact en dessous d'une dépouille inférieure (34) de l'élément coulissant (18), qui est réalisée au niveau de l'élément coulissant (18) pratiquement en face de l'élément de retenue à ressort (32).

8. Dispositif de rangement selon la revendication 1, **caractérisé en ce que** le dispositif de rangement (10) comporte une source de lumière (82), qui émet de la lumière vers le bord périphérique d'un disque compact (12) posé dans l'élément coulissant (18).

9. Dispositif de rangement selon la revendication 8, **caractérisé en ce que** la source de lumière (82) comporte un guide de lumière (80) qui s'étend à partir de la source de lumière (82) vers le bord périphérique d'un disque compact (12) posé dans l'élément coulissant (18).

10. Dispositif de rangement selon la revendication 9, **caractérisé en ce que** le dispositif de rangement (10) comporte plusieurs éléments coulissants (18) et **en ce que** le guide de lumière (80) partant d'une source de lumière (82) commune se ramifie vers les éléments coulissants (18).

11. Dispositif de rangement selon la revendication 1, 7 ou 8, **caractérisé en ce que** l'élément coulissant (18) ou le boîtier (14) comporte un taquet d'encliquetage (44) flexible qui, lorsque l'élément coulissant (18) est dans la position de prélèvement, vient en appui contre une butée de fin de course d'extraction (72) du boîtier (14) ou de l'élément coulissant (18).
